# FASCICULE DE BREVET EUROPEEN

(11) **EP 2 638 717 B1**
(45) Date de publication et mention de la délivrance du brevet: **06.09.2017**
(21) Numéro de dépôt: 11778899.2
(22) Date de dépôt: 04.11.2011
(51) Int. Cl.: H04W 8/26

(54) **TERMINAL ET PROCEDE POUR TRANSMETTRE UN IDENTIFIANT D'ABONNEMENT**
ENDGERÄT UND VERFAHREN ZUR SENDUNG EINER ABONNEMENTIDENTITÄT
TERMINAL AND METHOD FOR TRANSMITTING A SUBSCRIPTION IDENTIFIER

(30) Priorité: 10.11.2010 FR 1004392
(43) Date de publication de la demande: 18.09.2013
(73) Titulaire: Airbus Defence and Space SAS, 78130 Les Mureaux (FR)
(72) Inventeur: GIRARDEAU, Laurent, F-78580 Maule (FR); CARTIGNY, Marc, F-78400 Chatou (FR)
(74) Mandataire: Le Guen-Maillet
(86) Numéro de dépôt international: PCT/EP2011/069461
(87) Numéro de publication internationale: WO 2012/062667

(56) Documents cités:
- WO-A1-2007/085780
- US-A1- 2005 050 352
- YING QIU ET AL: "Protocol for hiding movement of mobile nodes in mobile IPv6", VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 2, 25 septembre 2005 (2005-09-25), pages 812-815, XP010878596, DOI: DOI:10.1109/VETECF.2005.1558037 ISBN: 978-0-7803-9152-9

## Description

La présente invention concerne l'enregistrement d'au moins un terminal parmi une pluralité de terminaux dans un réseau pour l'accès à un service de communication, tel qu'un service de téléphonie.

Lorsqu'un utilisateur souhaite accéder à un service de communication, une phase d'enregistrement doit être mise en oeuvre pour vérifier que l'utilisateur dispose de l'abonnement adéquat. Pendant cette phase d'enregistrement, le terminal dont l'utilisateur se sert pour tenter d'accéder à ces services transmet un identifiant d'abonnement. Cet identifiant est vérifié par un serveur du gestionnaire des services de communication et si l'identifiant est valide, l'accès à ces services est validé.

Selon un premier exemple, de tels services de communication sont mis en oeuvre dans un réseau de téléphonie conforme à la norme GSM (*Global System for Mobile communications* en anglais ou *Système Global pour communications Mobiles* en français). Selon le document de spécification *«3GPP TS 03.03: Numbering, Addressing and Identification »,* un terminal mobile doit s'enregistrer dans le réseau en transmettant l'identifiant IMSI (*International Mobile Subscriber Identity* en anglais ou *Identité Internationale de Soarscripteur (de service) Mobile* en français). L'identifiant IMSI est contenu dans la carte SIM (*Subscriber Identity Module* en anglais ou *Module d'Identité de Souscripteur* en français) remise à chaque abonné par l'opérateur de téléphonie mobile et sert à identifier l'abonné lors des accès aux services de téléphonie mobile.

Selon un second exemple, de tels services de communication sont des services de téléphonie mis en oeuvre sur le réseau Internet, par utilisation de mécanismes VoIP (*Voice over Internet Procotol* en anglais ou Voix sur Protocole Internet en français). L'utilisateur se connecte à un service de téléphonie en communiquant son identifiant d'abonnement et son mot de passe, et une fois connecté, il est possible de le contacter grâce à l'adresse IP (*Internet Protocol* en anglais ou *Protocole Internet* en français) attribuée au terminal qu'il utilise.

Selon un troisième exemple, de tels services de communication sont des services de messagerie, de type courriers électroniques ou de type messages instantanés. De la même manière, l'utilisateur se connecte au service en communiquant son identifiant d'abonnement et son mot de passe, et une fois connecté, il est possible de le contacter grâce à l'adresse de messagerie, telle qu'une adresse de courrier électronique, attribuée à l'abonnement souscrit.

Un identifiant d'abonnement, souscrit auprès du gestionnaire des services de communication, est donc nécessaire pour permettre à l'utilisateur d'accéder à ces services. Cependant, cet identifiant permet aussi de tracer les communications impliquant l'utilisateur, voire de déterminer sa position dans la zone de couverture du réseau. L'utilisateur peut alors être facilement l'objet d'écoutes téléphoniques, et/ou d'enregistrements de ses échanges de données, et/ou de surveillance de sa position et/ou de ses déplacements, à son insu.

Le document « Protocol for Hiring Movement of Mobile Nodes in Mobile IPv6 », Y.Qiu et al, Vehicular Technology Conference, IEEE, 2005, décrit un protocole masquant une adresse IP (« *Internet protocol»* en anglais) de type CoA (*«care-of address*» en anglais) d'un terminal mobile, grâce à un mécanisme de translation d'adresses. Ce document fait de plus mention d'une structure a base d'agents permettant de remplacer des adresses MAC par des identifiants anonymes permettant cependant une authentification du terminal mobile.

Le document WO 2007/085780 A1 décrit un dispositif de communication, qui peut être un téléphone mobile, et qui permet à son utilisateur d'éviter d'être tracé.

Le document US 2005/050352 A1 décrit un système pour éviter que ne soit tracée la localisation d'un terminal mobile, plus particulièrement dans des réseaux. WiFi, par sélection d'adresse MAC dans un jeu d'adresses MAC dont dispose ledit terminal mobile.

Il est souhaitable de pallier ces différents inconvénients de l'état de la technique.

L'invention concerne un dispositif destiné à enregistrer un terminal dans un réseau de communication, ledit dispositif étant adapté pour permettre au terminal de transmettre, lors d'une phase d'enregistrement du terminal dans ledit réseau, un identifiant d'abonnement à un service de communication mis en oeuvre dans ledit réseau. Le dispositif est tel qu'il comporte des moyens de changement dynamique de l'identifiant d'abonnement audit service pour obtenir un nouvel identifiant d'abonnement, et des moyens de réenregistrement dans ledit réseau avec le nouvel identifiant d'abonnement. Ainsi, on réduit le risque que les communications impliquant le terminal ne soient aisément tracées.

Selon un mode de réalisation particulier, le dispositif comporte en outre des moyens de changement dynamique d'identifiant d'appel associé à au moins un autre terminal enregistré dans ledit réseau. Ainsi, lorsque les identifiants d'abonnements sont dynamiquement changés pour d'autres terminaux, le dispositif peut continuer à communiquer avec ces terminaux.

Selon un mode de réalisation particulier, le dispositif comporte des moyens de communication avec un serveur via ledit réseau, lesdits moyens de communication étant adaptés pour recevoir dudit serveur une information représentative du nouvel identifiant d'abonnement.

Selon un mode de réalisation particulier, ladite information est le nouvel identifiant d'abonnement. Ainsi, le terminal ne contient pas d'information concernant tout nouvel identifiant d'abonnement jusqu'à ce que le serveur lui en communique. La sécurité est ainsi renforcée en cas de vol du terminal.

Selon un mode de réalisation particulier, le dispositif comporte des moyens de sélection du nouvel identifiant d'abonnement parmi une pluralité d'identifiants d'abonnement stockés par ledit dispositif. Ainsi, les identifiants d'abonnement sujets à changement dynamique ne transitent pas par le réseau, autrement que dans le cadre normal de l'enregistrement du terminal dans le réseau. La sécurité est ainsi renforcée en cas de surveillance de transmissions.

Selon un mode de réalisation particulier, ladite information est un index dans une table stockée par ledit dispositif et comportant, de manière indexée, ladite pluralité d'identifiants d'abonnement. Ainsi, le serveur peut prendre des décisions de changement dynamique en fonction de données externes au terminal, et seule une information inexploitable sans la connaissance de la table indexée transite sur le réseau.

Selon un mode de réalisation particulier, lesdits moyens de changement dynamique sont mis en oeuvre en fonction d'au moins un des événements déclencheurs suivants: une durée de temporisation est écoulée ; un instant prédéterminé est atteint ; une communication, via ledit réseau, avec un autre terminal enregistré dans ledit réseau a pris fin ; ledit dispositif est nouvellement positionné dans une zone géographique prédéterminée ; un message de synchronisation est reçu.

Selon un mode de réalisation particulier, le dispositif consiste en une carte SIM pour terminal mobile de radiotéléphonie cellulaire.

L'invention concerne également un procédé mis en oeuvre par un dispositif destiné à enregistrer un terminal dans un réseau de communication, ledit dispositif étant adapté pour permettre au terminal de transmettre, lors d'une phase d'enregistrement du terminal dans le dit réseau, un identifiant d'abonnement à un service de communication mis en oeuvre dans ledit réseau. Le procédé est tel qu'il comporte des étapes de changement dynamique de l'identifiant d'abonnement audit service pour obtenir un nouvel identifiant d'abonnement, et de réenregistrement dans ledit réseau avec le nouvel identifiant d'abonnement.

L'invention concerne également des moyens de stockage comprenant un programme d'ordinateur comprenant des instructions pour implémenter le procédé mentionné ci-dessus, lorsque ledit programme est exécuté par un système informatique ou un processeur.

L'invention concerne également un système de gestion de communications d'au moins un terminal parmi une pluralité de terminaux dans un réseau de communication, chaque terminal étant adapté pour transmettre, lors d'une phase d'enregistrement dans le dit réseau, un identifiant d'abonnement à un service de communication mis en oeuvre dans ledit réseau, à chaque identifiant d'abonnement étant associé un identifiant d'appel pour permettre d'appeler le terminal enregistré avec ledit identifiant d'abonnement. Le système est tel qu'il comporte des moyens de changement dynamique d'identifiant d'abonnement audit service et d'identifiant d'appel associé, pour au moins un desdits terminaux ; et des moyens de réenregistrement dans ledit réseau de chaque terminal pour lequel l'identifiant d'abonnement audit service et l'identifiant d'appel associé ont été dynamiquement changés.. Ainsi, il est possible de réduire le risque que les communications au sein d'une flotte de terminaux ne soient tracées.

Selon un mode de réalisation particulier, lesdits moyens de changement dynamique sont adaptés pour appliquer, de manière substantiellement synchronisée, un changement de l'identifiant d'abonnement audit service d'au moins un premier terminal dans ce premier terminal et un changement de chaque indentifiant d'appel associé dans au moins un second terminal. Ainsi, il est possible de réduire le risque que les communications au sein d'une flotte de terminaux ne soient tracées, tout en permettant aux terminaux de continuer à pouvoir communiquer entre eux.

Selon un mode de réalisation particulier, les moyens de changement dynamique sont adaptés pour que, lorsqu'un premier terminal souhaite communiquer avec un second terminal, le premier terminal met en oeuvre des moyens de requête, auprès d'un serveur, de l'identifiant d'appel attribué audit premier terminal.

Selon un mode de réalisation particulier, le système comporte un serveur adapté pour transmettre auxdits terminaux des messages courts pour la mise en oeuvre desdits moyens de changement dynamique, lesdits messages étant échangés via un centre de service de message court masquant ledit serveur pour les dispositifs dudit réseau. Ainsi, on réduit le risque que le serveur ne soit repéré et on réduit encore le risque que les communications ne soient tracées.

Selon un mode de réalisation particulier, le système comporte un serveur de messagerie vocale comportant, mis en oeuvre sur renvoi d'appel suite à une absence de réponse d'un desdits terminaux, dit terminal originellement appelé : des moyens de détermination de l'identifiant d'appel du terminal appelé; des moyens de détermination d'un identifiant fixe du terminal appelé, à partir de l'identifiant d'appel déterminé; des moyens d'enregistrement d'un message vocal à l'attention dudit terminal originellement appelé et d'association du message vocal enregistré avec l'identifiant fixe déterminé. Ainsi, malgré le changement dynamique d'identifiants d'abonnement et d'appel, il est possible de laisser un message vocal.

Selon un mode de réalisation particulier, le serveur de messagerie vocale comporte en outre, mis en oeuvre sur appel d'un desdits terminaux, dit terminal appelant : des moyens de détermination de l'identifiant d'appel du terminal appelant ; des moyens de détermination d'un identifiant fixe du terminal appelant, à partir de l'identifiant d'appel déterminé ; des moyens de récupération, à partir de l'identifiant fixe déterminé, d'au moins un message vocal à l'attention dudit terminal appelant et de fourniture dudit message vocal récupéré audit terminal appelant. Ainsi, malgré le changement dynamique d'identifiants d'abonnement et d'appel, il est possible de consulter d'éventuels messages vocaux en attente.

L'invention concerne également un procédé de gestion de communications d'au moins un terminal parmi une pluralité de terminaux dans un réseau de communication, chaque terminal étant adapté pour transmettre, lors d'une phase d'enregistrement dans le dit réseau, un identifiant d'abonnement à un service de communication mis en oeuvre dans ledit réseau, à chaque identifiant d'abonnement étant associé un identifiant d'appel pour permettre d'appeler le terminal enregistré avec ledit identifiant d'abonnement audit service. Le procédé est mis en oeuvre par au moins un dispositif dudit réseau, et est tel qu'il comporte des étapes de changement dynamique d'identifiant d'abonnement audit service et d'identifiant d'appel associé, pour au moins un desdits terminaux ; et de réenregistrement dans ledit réseau de chaque terminal pour lequel l'identifiant d'abonnement audit service et l'identifiant d'appel associé ont été dynamiquement changés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau de téléphonie dans lequel l'invention peut être mise en oeuvre ;
- la Fig. 2 illustre schématiquement l'architecture d'un terminal adapté pour s'enregistrer dans le réseau de la Fig. 1 ;
- les Figs. 3, 4 et 6 illustrent schématiquement des communications dans le réseau de la Fig. 1 ;
- les Figs. 5a et 5b illustrent schématiquement des tables d'identification mises en oeuvre dans le réseau de la Fig. 1 ;
- les Figs. 7 et 8 illustrent schématiquement des communications dans le réseau de la Fig. 1 pour l'accès à un service de messagerie vocale.

De manière à éviter que l'ensemble des communications impliquant un utilisateur donné puisse être tracé, il est proposé de changer dynamiquement l'identifiant d'abonnement de l'utilisateur. Ainsi, il est difficile de tracer ces communications, puisqu'il n'est pas connu de celui qui veut mettre en place l'écoute téléphonique, et/ou l'enregistrement des données, et/ou la surveillance de position et/ou de déplacement, que l'utilisateur va changer d'identifiant d'abonnement.

Selon un mode de réalisation particulier, on cherche à éviter que les communications impliquant au moins un terminal d'une flotte de terminaux, c'est-à-dire d'une pluralité de terminaux, puissent être tracées. On cherche en outre à ce que les terminaux de la flotte puissent continuer à communiquer entre eux, et ce de manière transparente pour les utilisateurs de ces terminaux. Lorsqu'un terminal voit son identifiant d'abonnement dynamiquement changer, on procède alors au changement dynamique de l'identifiant d'appel correspondant dans les autres terminaux de la flotte.

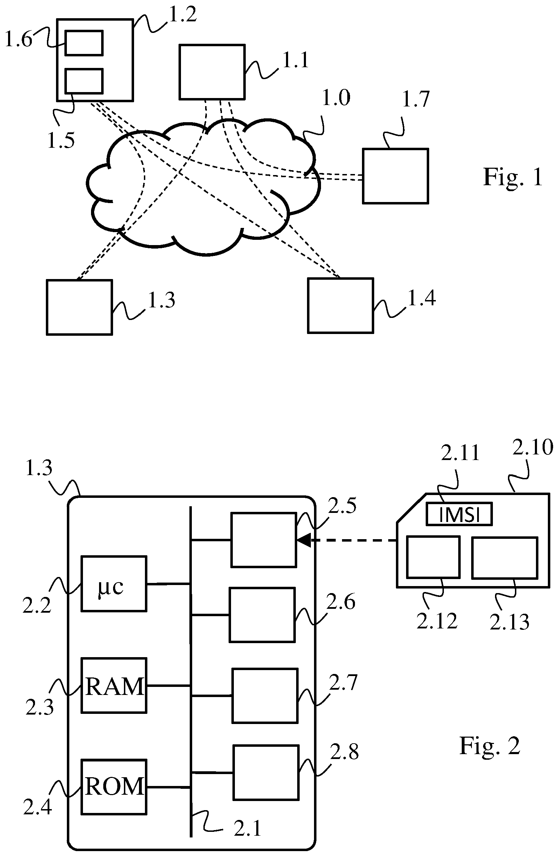

La Fig. 1 illustre schématiquement un réseau de téléphonie 1.0 dans lequel l'invention peut être mise en oeuvre.

Le réseau de téléphonie 1.0 est géré par au moins un serveur 1.1 mettant en oeuvre des services de téléphonie. Le réseau de téléphonie 1.0 peut être le réseau Internet et les services de téléphonie peuvent reposer sur des mécanismes VoIP.

Il est considéré dans la suite de la description détaillée, à titre d'illustration, que le réseau de téléphonie 1.0 est conforme à la norme GSM. Le serveur 1.1 est alors un équipement de type MSC (*Mobile-services Switching Centre* en anglais ou *Centre de Commutation pour Services Mobiles* en français). Le serveur 1.1 a accès à des bases de données de type HLR (*Home Location Register* en anglais ou *Registre de Localisation d'Abonnés* en français) et VLR (*Visitor Location Register* en anglais ou *Registre de Localisation de Visiteurs* en français) pour enregistrer un terminal dans le réseau et permettre que des communications l'impliquant soient établies.

Lorsqu'un terminal mobile 1.3, 1.4 ou 1.7 tente de rejoindre le réseau de téléphonie 1.0, il doit s'enregistrer en transmettant son identifiant d'abonnement, c'est-à-dire son identifiant IMSI, au serveur 1.1. Cet identifiant est vérifié auprès de la base de données HLR, et s'il correspond à un abonnement valide, le serveur 1.1 permet au terminal mobile 1.3, 1.4 ou 1.7 de mettre en oeuvre des communications avec d'autres terminaux, via le réseau de téléphonie 1.0 et le serveur 1.1.

Dans la suite de la description, on considère que les terminaux mobiles 1.3, 1.4 et 1.7 constituent la flotte de terminaux. On cherche à éviter que les communications impliquant au moins un des terminaux mobiles 1.3, 1.4 et 1.7 puissent être tracées.

Selon un mode de réalisation de l'invention, le réseau de téléphonie 1.0 peut comporter un serveur 1.2. Comme il est décrit pas la suite, le serveur 1.2 permet la mise en oeuvre du changement dynamique des identifiants IMSI des terminaux mobiles 1.3 et 1.4. Il comporte une table d'identification 1.6 qui comporte des identifiants des terminaux mobiles 1.3, 1.4 et 1.7, ainsi que les identifiants IMSI et identifiants d'appel MS-ISDN (*Mobile Station Integrated Services Digital Network Number* en anglais ou *Numéro de Station Mobile pour Réseau Numérique de Services Intégrés* en français) qui leur sont associés à un instant donné.

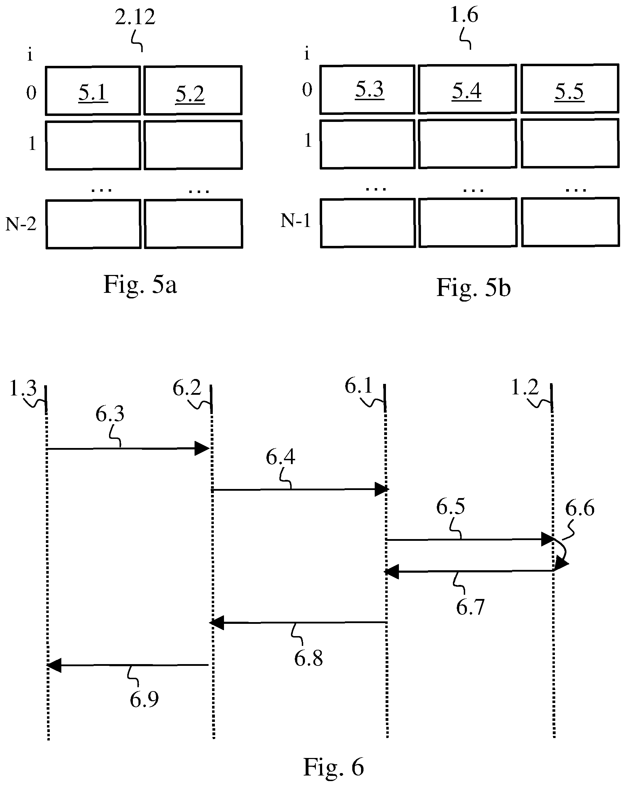

La Fig. 5b illustre schématiquement un exemple de réalisation de la table 1.6. Les éléments de la table sont référencés selon un index « *i* ». L'index *i* peut prendre les valeurs entières allant de *0* à *N-1*, où *N* est le nombre de terminaux de la flotte. Chaque terminal de la flotte est ainsi représenté dans la table 1.6. A un instant t, pour chaque valeur d'index, la table 1.6 comporte un identifiant 5.3 de terminal, comme par exemple un nom qui lui est attribué et connu de tous les dispositifs de la flotte, l'identifiant d'appel MS-ISDN qui est attribué à ce terminal à l'instant t, et l'identifiant d'abonnement IMSI qui correspond à cet identifiant d'appel MS-ISDN.

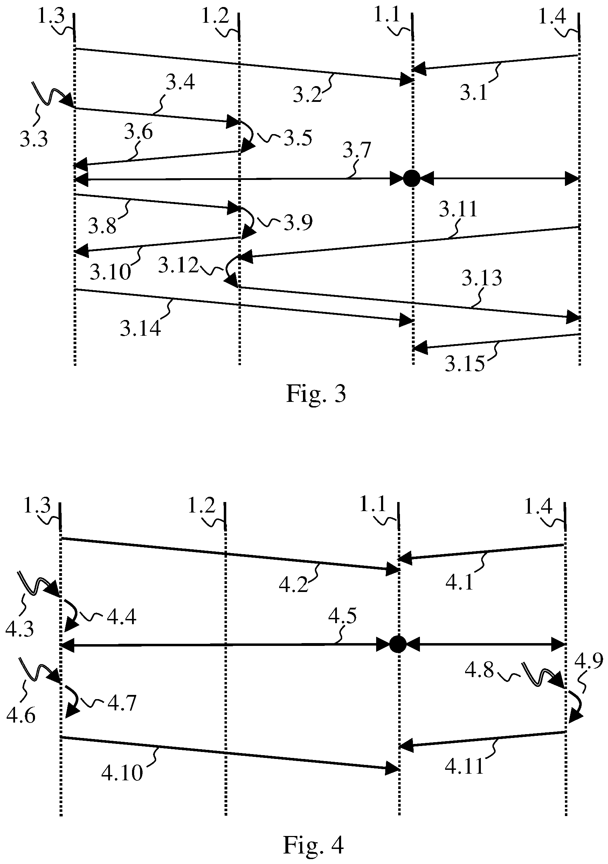

Le serveur 1.2 comporte en outre une table 1.5 qui contient des identifiants IMSI et MS-ISDN disponibles pour effectuer le changement dynamique d'abonnement des terminaux mobiles 1.3, 1.4 et 1.7. On entend par identifiants IMSI et MS-ISDN disponibles des références, respectivement identifiants d'abonné et identifiants d'appel associés, à des abonnements souscrits auprès d'un opérateur de téléphonie et qui permettent l'accès au réseau de téléphonie 1.0. Ainsi, un ensemble d'abonnements est mis à disposition des terminaux mobiles 1.3, 1.4 et 1.7. La gestion des tables 1.5 et 1.6 est décrite ci-après en relation avec la Fig. 3.

La Fig. 2 illustre schématiquement l'architecture du terminal mobile 1.3. Les terminaux mobiles 1.4 et 1.7 disposent de la même architecture.

Le terminal mobile 1.3 comporte, reliés par un bus de communication 2.1 :
- un processeur, micro-processeur, microcontrôleur (noté *µc)* ou CPU (*Central Processing Unit* en anglais ou *Unité Centrale de Traitement* en français) 2.2 ;
- une mémoire vive RAM (*Random Access Memory* en anglais ou *Mémoire à Accès Aléatoire* en français) 2.3 ;
- une mémoire morte ROM *(Read Only Memory* en anglais ou *Mémoire à Lecture Seule* en français) 2.4 ;
- un lecteur 2.5 de carte SIM ;
- un lecteur 2.6 de medium de stockage, tel qu'un lecteur de carte SD (*Se cure Digital Card* en anglais ou *Carte Numérique Sécurisée* en français) ;
- des moyens d'interface 2.7 avec un le réseau de téléphonie 1.0 ; et
- des moyens d'interface homme-machine 2.8.

Le microcontrôleur 2.2 est capable d'exécuter des instructions chargées dans la RAM 2.3 à partir de la ROM 2.4, d'un support de stockage, tel qu'une carte SD ou autre, ou d'un réseau de communication. Lorsque le terminal mobile 1.3 est mis sous tension, le microcontrôleur 2.2 est capable de lire de la RAM 2.3 des instructions et de les exécuter. Ces instructions forment un programme d'ordinateur. Ce programme d'ordinateur cause la mise en oeuvre, par le microcontrôleur 2.2, de tout ou partie des étapes décrites ci-après en relation avec les Figs. 3, 4 à 6.

Tout ou partie des algorithmes décrits ci-après en relation avec les Figs. 3, 4 à 6 peut être implémenté sous forme logicielle par exécution d'un ensemble d'instructions par une machine ou un circuit programmable, tel qu'un DSP *(Digital Signal Processor* en anglais ou *Unité de Traitement de Signal Numérique* en français) ou un microcontrôleur, tel que le microcontrôleur 2.2, ou être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

Dans un mode de réalisation particulier, le terminal mobile 1.3 est un terminal de radiotéléphonie cellulaire, et tout ou partie des étapes décrites ci-après en relation avec les Figs. 3, 4 à 6 est mis en oeuvre par une carte SIM 2.10 lorsqu'elle est insérée dans le lecteur de carte SIM 2.5 du terminal mobile 1.3.

La carte SIM 2.10 comprend un registre 2.11 qui comporte l'identifiant IMSI utilisé, ou à utiliser, pour enregistrer le terminal mobile 1.3 dans le réseau de téléphonie 1.0. En d'autres termes, le registre 2.11 comporte l'identifiant IMSI courant du terminal mobile 1.3.

La carte SIM 2.10 peut comporter en outre une table d'identification 2.12 qui contient un identifiant du terminal mobile 1.4 et l'identifiant d'appel MS-ISDN qui lui est attribué, ainsi qu'un identifiant du terminal mobile 1.7 et l'identifiant d'appel MS-ISDN qui lui est attribué. En d'autres termes, la table d'identification 2.12 est un annuaire regroupant des noms de contacts, cet annuaire étant dynamiquement modifié en ce qui concerne les identifiants d'appels MS-ISDN attribués à ces contacts. La carte SIM 2.10 peut comporter en outre une table 2.13 qui contient des identifiants IMSI et MS-ISDN disponibles pour effectuer le changement dynamique d'abonnement des terminaux mobiles 1.3, 1.4 et 1.7. Dans une variante de réalisation, la relation entre identifiants IMSI et MS-ISDN n'est pas fixe, et la carte SIM 2.10 comporte deux tables distinctes en remplacement de la table 2.13 : une de ces tables contient les identifiants IMSI disponibles et l'autre les identifiants d'appel MS-ISDN disponibles. La gestion des tables 2.12 et 2.13 est décrite ci-après en relation avec les Figs. 3 et 4.

La Fig. 5a illustre schématiquement un exemple de réalisation de la table 2.12. Les éléments de la table sont référencés selon un index « *i* ». L'index *i* peut prendre les valeurs entières allant de *0* à *N-2,* où *N* est le nombre de terminaux de la flotte. Chaque terminal de la flotte est ainsi représenté dans la table 1.6, à l'exception du terminal mobile 1.3, dans lequel la table 2.12 est mise en oeuvre. A un instant t, pour chaque valeur d'index, la table 2.12 comporte un identifiant 5.1 de terminal, comme par exemple un nom qui lui est attribué et connu de tous les dispositifs de la flotte, et l'identifiant d'appel MS-ISDN qui est attribué à ce terminal à l'instant t. Dans une variante de réalisation, la table 2.12 comprend *N* entrées et reprend les éléments 5.3 et 5.4 de la table 1.6, c'est-à-dire avec les éléments relatifs au terminal mobile 1.3.

La Fig. 3 illustre schématiquement des communications dans le réseau de téléphonie 1.0, dans un premier mode de réalisation de l'invention. Seuls les terminaux mobiles 1.3 et 1.4 de la flotte sont considérés pour simplifier la description.

Lors d'une étape 3.1, le terminal mobile 1.4 s'enregistre dans le réseau de téléphonie 1.0 auprès du serveur 1.1. Le terminal mobile 1.3 fait de même lors d'une étape 3.2. Un événement 3.3 est ensuite reçu par le terminal mobile 1.3, l'événement 3.3 indiquant qu'une communication avec le terminal mobile 1.4 est requise. Lors d'une étape 3.4 suivante, le terminal mobile 1.3 requiert auprès du serveur 1.2 des informations nécessaires pour communiquer avec le terminal mobile 1.4. Lors d'une étape 3.5 suivante, le serveur 1.2 détermine ces informations, et les transmet au terminal mobile 1.3 lors d'une étape 3.6. Ces informations peuvent correspondre à l'identifiant d'appel MS-ISDN associé au terminal 1.4, éventuellement sous forme chiffrée. Dans une variante de réalisation, le terminal mobile 1.3 comporte la table 2.13, qui reprend les éléments 5.4 de la table 1.6. Ces informations peuvent alors correspondre à l'index, dans la table 2.13, de l'identifiant d'appel MS-ISDN associé au terminal 1.4.

Lors d'une étape 3.7 suivante, le terminal mobile 1.3 établit une communication avec le terminal mobile 1.4 via le serveur 1.1 grâce aux informations reçues du serveur 1.2. Lorsque la communication entre les terminaux mobiles 1.3 et 1.4 a pris fin, le terminal mobile 1.3 requiert auprès du serveur 1.2 un changement de l'abonnement qui lui est attribué. Le terminal mobile 1.4 fait de même dans une étape 3.11. Lors d'une étape 3.9, le serveur 1.2 attribue un nouvel identifiant d'abonnement au terminal mobile 1.3 et, lors d'une étape 3.10 lui transmet une information représentative du nouvel identifiant IMSI qui lui est attribué. Lors d'une étape 3.12, le serveur 1.2 attribue un nouvel identifiant d'abonnement au terminal mobile 1.4 et, lors d'une étape 3.13 lui transmet une information représentative du nouvel identifiant IMSI qui lui est attribué. Ces informations peuvent respectivement correspondre aux identifiants IMSI attribués, éventuellement sous forme chiffrée. Dans une variante de réalisation, les terminaux mobiles 1.3 et 1.4 comportent chacun la table 2.13, qui reprend les éléments 5.5 de la table 1.6. Ces informations peuvent alors respectivement correspondre aux index, dans la table 2.13, des identifiants IMSI attribués. Les registres 2.11 des terminaux mobiles 1.3 et 1.4 sont alors mis à jour en conséquence. Lors d'une étape 3.14, le terminal mobile 1.3 se déconnecte du réseau de téléphonie 1.0 et se réenregistre dans le réseau de téléphonie 1.0 auprès du serveur 1.1, en utilisant le nouvel identifiant qui lui a été attribué. Le terminal mobile 1.4 fait de même lors d'une étape 3.15. Le procédé peut alors être réitéré à compter de l'étape 3.4 sur réception d'un nouvel événement 3.3.

Dans une variante de réalisation, le serveur 1.2 émet à chaque terminal de la flotte un message de synchronisation comprenant l'identifiant IMSI nouvellement affecté au terminal mobile auquel le message est adressé. Les terminaux mobiles 1.3 et 1.4 mettent alors en oeuvre les étapes 3.8 à 3.15 sur réception de ce message de synchronisation.

Dans une variante de réalisation, l'évènement 3.3 peut être aussi déclencheur de la mise en oeuvre des étapes 3.8, 3.9, 3.10 et 3.14.

La Fig. 4 illustre schématiquement des communications dans le réseau de téléphonie 1.0, dans un second mode de réalisation de l'invention. Seuls les terminaux mobiles 1.3 et 1.4 de la flotte sont considérés pour simplifier la description.

Lors d'une étape 4.1, le terminal mobile 1.4 s'enregistre dans le réseau de téléphonie 1.0 auprès du serveur 1.1. Le terminal mobile 1.3 fait de même lors d'une étape 4.2. Un événement 4.3 est ensuite reçu par le terminal mobile 1.3, l'événement 4.3 indiquant qu'une communication avec le terminal mobile 1.4 est requise. Lors d'une étape 4.4 suivante, le terminal mobile 1.3 détermine l'identifiant d'appel MS-ISDN à utiliser pour communiquer avec le terminal mobile 1.4. Pour ce faire, il parcourt la table 2.12 et obtient cet identifiant d'appel MS-ISDN 5.2 à partir de l'identifiant 5.1 du terminal mobile 1.4. Lors d'une étape 4.5 suivante, le terminal mobile 1.3 établit une communication avec le terminal mobile 1.4 via le serveur 1.1 grâce à l'identifiant d'appel MS-ISDN obtenu lors de l'étape 4.4.

Ensuite, une fois que la communication a pris fin, les terminaux mobiles 1.3 et 1.4 reçoivent, ou génèrent, des événements déclencheurs respectifs 4.6 et 4.8. Lorsque les événements déclencheurs sont reçus par les terminaux mobiles, et non générés par eux, un protocole peut être mis en oeuvre de manière à assurer que chaque terminal mobile de la flotte a reçu l'événement déclencheur qui lui est destiné, par exemple en utilisant un mécanisme d'acquittement. Le terminal mobile 1.3 met alors à jour, à partir de la table 2.13, son identifiant IMSI 2.11 et la table 2.12. Le terminal mobile 1.3 remplace ainsi son identifiant d'abonnement téléphonique, et l'identifiant d'appel MS-ISDN du terminal mobile 1.4, par de nouvelles valeurs. Le terminal mobile 1.4 fait de même lors d'une étape 4.9. Chacun des terminaux de la flotte se retrouve ainsi avec une nouvelle affectation d'abonnement téléphonique. Lors d'une étape 4.10, le terminal mobile 1.3 se réenregistre dans le réseau de téléphonie 1.0 auprès du serveur 1.1, en utilisant le nouvel identifiant qui lui a été attribué. Ce réenregistrement comprend une phase initiale de déconnexion du réseau. Le terminal mobile 1.4 fait de même lors d'une étape 4.11. Le procédé peut alors être réitéré à compter de l'étape 4.4 sur réception d'un nouvel événement 4.3.

L'événement déclencheur 4.6, 4.8 du changement dynamique d'identifiant IMSI d'au moins un terminal mobile de la flotte est que la communication, via le réseau de téléphonie 1.0, entre les terminaux mobiles 1.3 et 1.4 a pris fin. Dans des variantes de réalisation, l'événement déclencheur 4.6, 4.8 peut être qu'une durée de temporisation est écoulée, qu'un instant prédéterminé est atteint, que le terminal mobile concerné est nouvellement positionné dans une zone géographique prédéterminée que le terminal mobile 1.3 peut par exemple obtenir grâce à un module GPS (*Global Positioning System* en anglais ou *Système de Positionnement Global* en français) interne, ou qu'un message de synchronisation est reçu. Un tel message de synchronisation est par exemple transmis par le serveur 1.2 ou par un autre terminal de la flotte. Dans le cas où l'événement déclencheur 4.6, 4.8 du changement dynamique d'identifiant IMSI est que le terminal mobile concerné est nouvellement positionné dans une zone géographique prédéterminée, le terminal mobile concerné envoi un message à l'ensemble des terminaux mobiles de la flotte pour que chaque terminal mobile effectue la mise à jour correspondante.

Pour pouvoir changer dynamiquement leurs identifiants IMSI respectifs, les terminaux mobiles 1.3 et 1.4 disposent de la même table 2.13. Sur réception des événements 4.6 et 4.8, les terminaux mobiles 1.3 et 1.4 sélectionne leurs identifiants IMSI respectifs, en appliquant une séquence pseudo-aléatoire orthogonale. Cela permet de changer dynamiquement les affectations d'abonnement téléphonique à l'ensemble des terminaux de la flotte sans qu'il y ait collision dans ces affectations. De la même manière, chacun obtient les identifiants d'appel MS-ISDN des autres terminaux de la flotte.

Selon un mode de réalisation particulier, les événements 4.6 et 4.8 sont reçus, ou générés, de manière substantiellement synchronisée. Ainsi, il est possible d'appliquer, de manière substantiellement synchronisée, un changement de l'identifiant d'abonnement téléphonique d'au moins un premier terminal et un changement de chaque identifiant d'appel associé dans au moins un second terminal. Le changement peut ne pas être parfaitement synchronisée sur les terminaux, par exemple du fait que les messages transmis par le serveur 1.2 peuvent avoir des temps de transit différents, que les horloges internes des terminaux peuvent être décalées les unes par rapport aux autres, ou que l'on attend qu'une communication en cours entre deux terminaux ait pris fin avant d'appliquer le changement.

La Fig. 6 illustre schématiquement des communications dans le réseau de téléphonie 1.0 entre le terminal mobile 1.3 ou 1.4 et le serveur 1.2. Ces communications prennent préférentiellement la forme de messages courts. Préférentiellement, ces messages courts sont de type SMS, et les communications depuis le serveur 1.2 vers le terminal mobile 1.3 ou 1.4 prennent particulièrement la forme de messages courts de type OTA SMS (*Over-The-Air Short Message Service* en anglais ou *Service de Messages Courts* par les Airs en français) selon le document de spécification « *3GPP TS 03.48 : Security Mechanisms for SIM Application Toolkit; Stage 2* ». Ainsi, il est possible que le serveur 1.2 puisse échanger des informations avec la carte SIM 2.10 de manière à ce que ces échanges soient transparents pour l'utilisateur, et pour le microcontrôleur 2.2.

De manière préférentielle, les communications entre le terminal mobile 1.3 ou 1.4 et le serveur 1.2 sont réalisées sous forme chiffrée.

Lors d'une étape 6.3, le terminal mobile 1.3 transmet un message, par exemple la requête 3.4, à destination du serveur 1.2. Le message est tout d'abord reçu par un premier centre 6.2 de service de messages courts SMSC (*Short Message Service Centre* en anglais), typiquement celui de l'opérateur du réseau de téléphonie 1.0. Lors d'une étape 6.4, le message est transmis à un second centre 6.1 de service de messages courts SMSC. Ce second centre 6.2 est un centre de confiance vis-à-vis de la flotte de terminaux mobiles, typiquement celui de l'opérateur auprès duquel les abonnements pour les terminaux mobiles de la flotte ont été souscrits. Le message est ensuite transmis au serveur 1.2, lors d'une étape 6.5. Lors d'une étape 6.6, le serveur 1.2 effectue le traitement adéquat en fonction du message reçu et génère en réponse un message à destination du terminal mobile 1.3. Lors d'une étape 6.7, le message est transmis à destination du terminal mobile 1.3. Ce message est tout d'abord reçu par le second centre 6.2, puis transmis dans une étape 6.8 au premier centre 6.1, qui le transmet ensuite au terminal mobile 1.3 dans une étape 6.9. Ainsi, le serveur 1.2 est masqué par le premier centre 6.1 du point de vue du second centre 6.2 et des autres dispositifs du réseau de téléphonie 1.0, ce qui réduit encore les risques que les communications au sein de la flotte ne soient tracées et que le serveur 1.2 ne soit repéré.

Le serveur 1.2 peut en outre utiliser un message court de type SMS OTA, dit aussi message court de classe 2, pour mettre à jour la table 2.13 des terminaux de la flotte.

De plus, le serveur 1.2 et/ou le premier centre 6.1 peut associer une information de durée de vie aux messages transmis du serveur 1.2 aux terminaux de la flotte. Ainsi, si un message est adressé à un terminal pour lequel une communication est en cours, le message ne sera délivré au terminal après la fin de la communication que si le message n'est pas périmé. Ainsi, on évite que le terminal ne reçoive une information périmée, telle qu'un identifiant IMSI qui lui a été attribué mais qui, pendant la période d'indisponibilité du terminal, a été attribué à un autre terminal.

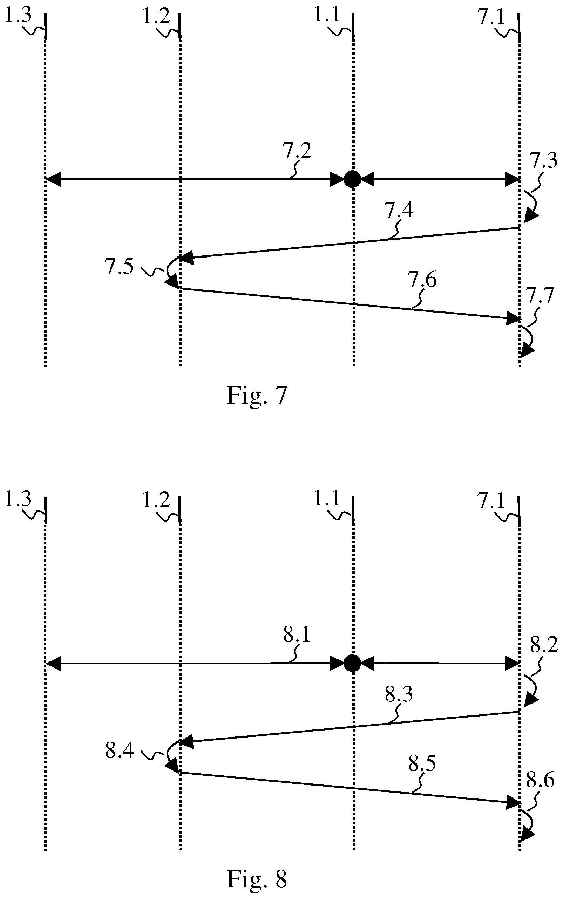

La Fig. 7 illustre schématiquement des premières communications dans le réseau de téléphonie 1.0 pour l'accès à un service de messagerie vocale. Dans le cadre de la Fig. 7, le terminal mobile 1.3 cherche à joindre le terminal mobile 1.4. En cas de non-réponse du terminal mobile 1.4, l'appel est renvoyé à un serveur de messagerie vocale 7.1. Dans une étape 7.2, suite au renvoi d'appel, une communication est établie entre le terminal mobile 1.3 et le serveur 7.1. Dans une étape 7.3 suivante, le serveur 7.1 détermine l'identifiant d'appel MS-ISDN du terminal originellement appelé, c'est-à-dire le terminal mobile 1.4. Dans une étape 7.4 suivante, à partir de cet identifiant d'appel MS-ISDN, le serveur 7.1 requiert auprès du serveur 1.2 l'identifiant 5.3 correspondant au terminal originellement appelé. Il est rappelé que l'identifiant 5.3 est un identifiant fixe, connu de tous les dispositifs de la flotte, quelque soient les changements dynamiques d'identifiants d'abonnement et d'appel effectués. Le serveur 1.2 détermine l'identifiant 5.3 correspondant dans une étape 7.5 suivante et fournit cet identifiant 5.3 au serveur 7.1, dans une étape 7.6 suivante. Dans une étape 7.7 suivante, le serveur 7.1 récupère un message d'accueil de messagerie vocale associé au terminal mobile 1.4, à partir de l'identifiant 5.3 fourni par le serveur 1.2, et le serveur 7.1 joue ce message d'accueil dans le cadre de sa communication avec le terminal mobile 1.3. Le serveur 7.1 enregistre ensuite un message vocal, destiné au terminal mobile 1.4, et l'associe à l'identifiant 5.3.

Ainsi, bien que les identifiants d'abonnement et d'appel du terminal mobile 1.4 changent dynamiquement, il est possible de laisser un message vocal à l'attention de son utilisateur.

La Fig. 8 illustre schématiquement des secondes communications dans le réseau de téléphonie 1.0 pour l'accès au service de messagerie vocale. Dans le cadre de la Fig. 8, le terminal mobile 1.3 appelle le serveur 7.1 pour consulter d'éventuels messages vocaux en attente. Dans une étape 8.1, une communication est établie entre le terminal mobile 1.3 et le serveur 7.1. Dans une étape 8.2 suivante, le serveur 7.1 détermine l'identifiant d'appel MS-ISDN du terminal appelant, c'est-à-dire le terminal mobile 1.3. Dans une étape 8.3 suivante, à partir de cet identifiant d'appel MS-ISDN, le serveur 7.1 requiert auprès du serveur 1.2 l'identifiant 5.3 correspondant au terminal appelant. Le serveur 1.2 détermine l'identifiant 5.3 correspondant dans une étape 8.4 suivante et fournit cet identifiant 5.3 au serveur 7.1, dans une étape 8.5 suivante. Dans une étape 8.6 suivante, le serveur 7.1 récupère d'éventuels messages vocaux en attente pour le terminal mobile 1.3, à partir de l'identifiant 5.3 fourni par le serveur 1.2, et le serveur 7.1 fournit ces éventuels messages vocaux dans le cadre de sa communication avec le terminal mobile 1.3. Ainsi, bien que les identifiants d'abonnement et d'appel du terminal mobile 1.3 changent dynamiquement, il est possible de consulter d'éventuels messages vocaux à l'attention de son utilisateur.

Selon un mode de réalisation particulier, l'identifiant d'appel du serveur 7.1 peut changer dynamiquement. Il apparaît alors dans les tables 1.6 et 2.12 de la même manière que les terminaux de la flotte. Dans ce cas, il est nécessaire de modifier en conséquence, auprès du gestionnaire du service de communication, la programmation des numéros de renvoi d'appel sur non-réponse des terminaux de la flotte.

Selon un mode de réalisation particulier, les terminaux mobiles de la flotte peuvent aussi changer dynamiquement leurs identifiants IMEI (*International Mobile Equipment Identity* en anglais ou *Identité Internationale d'Equipement Mobile* en français) respectifs pour réduire encore les risques que les communications au sein de la flotte ne soient tracées.

L'invention a été décrite de façon détaillée dans le cadre d'un réseau de téléphonie de type GSM. L'invention peut être mise en oeuvre dans tout autre réseau de téléphonie mobile comportant une phase d'enregistrement avec transmission d'identifiant d'abonnement.

Comme déjà mentionné, l'invention peut être mise en oeuvre dans le cadre d'un système dans un réseau de téléphonie pour terminaux fixes et mobiles. L'invention peut notamment être mise en oeuvre dans le cadre de services de téléphonie VoIP.

Dans le cadre de services de téléphonie VoIP, mis en oeuvre selon le protocole d'initiation de session SIP (*Session Initiation Protocol* en anglais) décrit par la norme RFC 3261 de l'IETF, les abonnés sont identifiés à partir d'un identifiant de ressource uniforme URI (*Uniform Resource Identifier* en anglais) associé à un mot de passe. Grâce à cet identifiant, le terminal s'inscrit auprès d'un commutateur logiciel (*softswitch* en anglais) du gestionnaire, ou opérateur, du service de téléphonie qui lui alloue un numéro d'appel, ou identifiant d'appel. De la même façon qu'il a été précédemment décrit dans le contexte d'un réseau GSM, les identifiants d'abonnement et d'appel des différents terminaux d'une flotte peuvent être changés, de façon contrôlée par la flotte, et de manière transparente au gestionnaire, ou opérateur, du service de téléphonie.

En outre, il est à noter que les changements dynamiques d'identifiant d'abonnement et d'identifiant d'appel décrits précédemment s'appliquent aussi aux sessions de données et aux services de messagerie.

D'un point de vue des réseaux cellulaires, le gestionnaire, ou opérateur, du service de communication attribue une adresse IP à chaque terminal, lorsque celui-ci s'enregistre dans réseau. Ainsi, à l'instar de l'identifiant d'appel MS-ISDN, l'adresse IP est associée à l'identifiant IMSI. Donc, changer dynamiquement l'identifiant IMSI permet de changer dynamiquement d'adresse IP et donc de rendre le terminal moins repérable.

## Revendications

1. Terminal (1.3;1.4) destiné à être utilisé dans un réseau de communication (1.0), ledit terminal étant adapté pour transmettre, lors d'une phase d'enregistrement (4.1;4.2) dudit terminal dans ledit réseau, un identifiant (2.11) d'abonnement à un service de communication mis en oeuvre dans ledit réseau, ledit terminal comportant :
- des moyens de communication avec un serveur (1.2) via ledit réseau ;
- des moyens de changement dynamique (4.7;4.9) de l'identifiant d'abonnement audit service pour obtenir un nouvel identifiant d'abonnement ; et
- des moyens de réenregistrement (4.10;4.11) dans ledit réseau avec le nouvel identifiant d'abonnement,
**caractérisé en ce que** les moyens de changement dynamique sont adaptés pour que, lorsque ledit terminal souhaite communiquer avec un autre terminal dudit réseau avec le nouvel identifiant, ledit terminal met en oeuvre des moyens de requête, auprès du serveur (1.2), d'un identifiant d'appel attribué audit autre terminal, ledit identifiant d'appel permettant d'appeler ledit autre terminal qui est enregistré dans ledit réseau avec un identifiant d'abonnement respectif, et **en ce que** ledit terminal met en oeuvre des moyens d'établissement d'une communication avec ledit autre terminal grâce à une information représentative de l'identifiant d'appel dudit autre terminal reçue de la part du serveur en réponse à ladite requête.

2. Terminal selon la revendication 1, **caractérisé en ce que** lesdits moyens de communication étant adaptés pour recevoir (3.10;3.13) dudit serveur une information représentative du nouvel identifiant d'abonnement.

3. Terminal selon la revendication 2, **caractérisé en ce que** l'information représentative du nouvel identifiant d'abonnement est le nouvel identifiant d'abonnement.

4. Terminal selon l'une quelconque des revendications 1 à 3, **caractérisé en ce que** lesdits moyens de changement dynamique sont mis en oeuvre en fonction d'au moins un des événements déclencheurs suivants :
- une durée de temporisation est écoulée ;
- un instant prédéterminé est atteint ;
- une communication (3.7;4.5), via ledit réseau, avec l'autre terminal ou un terminal tiers enregistré dans ledit réseau a pris fin ;
- ledit terminal est nouvellement positionné dans une zone géographique prédéterminée.

5. Terminal selon l'une quelconque des revendications 1 à 4, **caractérisé en ce que** lesdits moyens de changement dynamique et lesdits moyens de réenregistrement sont mis en oeuvre dans une carte SIM (2.10) pour terminal mobile de radiotéléphonie cellulaire.

6. Procédé mis en oeuvre par un terminal (1.3;1.4) dans un réseau de communication (1.0), ledit terminal transmettant, lors d'une phase d'enregistrement (4.1;4.2) du terminal dans le dit réseau, un identifiant (2.11) d'abonnement à un service de communication mis en oeuvre dans ledit réseau, le terminal communication communiquant avec un serveur (1.2) via ledit réseau, le procédé comportant des étapes de :
- changement dynamique (4.7;4.9) de l'identifiant d'abonnement audit service pour obtenir un nouvel identifiant d'abonnement ; et
- réenregistrement (4.10;4.11) dans ledit réseau avec le nouvel identifiant d'abonnement,
**caractérisé en ce que**, lorsqu'un ledit terminal souhaite communiquer avec un autre terminal du réseau de communication avec le nouvel identifiant, ledit dispositif requiert, auprès du serveur (1.2), un identifiant d'appel attribué audit autre terminal, ledit identifiant d'appel permettant d'appeler ledit autre terminal qui est enregistré dans ledit réseau avec un identifiant d'abonnement respectif, et **en ce que** ledit terminal établit une communication avec ledit autre terminal grâce à une information représentative de l'identifiant d'appel dudit autre terminal reçue de la part du serveur en réponse à ladite requête.

7. Moyens de stockage, **caractérisé en ce qu'**ils stockent un programme d'ordinateur comprenant des instructions pour mettre en oeuvre, par un terminal dans un réseau de communication, le procédé selon la revendication 6, lorsque ledit programme est exécuté par un processeur dudit terminal.

8. Système (1.2,1.3) de gestion de communications dans un réseau de communication (1.0) entre des terminaux (1.3;1.4;1.7) selon l'une quelconque des revendications 1 à 5, ledit système comportant lesdits terminaux et un serveur (1.2), chaque terminal étant adapté pour transmettre, lors d'une phase d'enregistrement (3.1;3.2) dans le dit réseau, un identifiant (2.11) d'abonnement à un service de communication mis en oeuvre dans ledit réseau, à chaque identifiant d'abonnement (5.5) étant associé un identifiant d'appel (5.4) pour permettre d'appeler le terminal enregistré avec ledit identifiant d'abonnement, ledit système comportant :
- des moyens de changement dynamique d'identifiant d'abonnement audit service (3.11,3.12,3.13) et d'identifiant d'appel associé (3.4,3.5,3.6), pour au moins un desdits terminaux ; et
- des moyens de réenregistrement (3.15) dans ledit réseau de chaque terminal pour lequel l'identifiant d'abonnement audit service et l'identifiant d'appel associé ont été dynamiquement changés,
**caractérisé en ce que** les moyens de changement dynamique sont adaptés pour que, lorsqu'un premier terminal parmi lesdits terminaux souhaite communiquer avec un second terminal parmi lesdits terminaux, le premier terminal met en oeuvre des moyens de requête, auprès du serveur (1.2), de l'identifiant d'appel attribué audit second terminal, et **en ce que** ledit premier terminal met en oeuvre des moyens d'établissement d'une communication avec ledit second terminal grâce à une information représentative de l'identifiant d'appel dudit autre terminal reçue de la part du serveur en réponse à ladite requête.

9. Système selon la revendication 8, **caractérisé en ce que** ledit serveur (1.2) est adapté pour transmettre auxdits terminaux des messages courts pour la mise en oeuvre desdits moyens de changement dynamique, lesdits messages étant échangés via un centre de service (6.1) de message court masquant ledit serveur pour les dispositifs dudit réseau.

10. Système selon l'une quelconque des revendications 8 ou 9, **caractérisé en ce qu'**il comporte un serveur (7.1) de messagerie vocale comportant, mis en oeuvre sur renvoi d'appel suite à une absence de réponse d'un desdits terminaux, dit terminal originellement appelé :
- des moyens de détermination (7.3) de l'identifiant d'appel du terminal originellement appelé ;
- des moyens de détermination (7.4,7.5,7.6) d'un identifiant fixe du terminal originellement appelé, à partir de l'identifiant d'appel déterminé ;
- des moyens d'enregistrement d'un message vocal à l'attention dudit terminal originellement appelé et d'association du message vocal enregistré avec l'identifiant fixe déterminé.

11. Système selon la revendication 10, **caractérisé en ce que** le serveur de messagerie vocale comporte en outre, mis en oeuvre sur appel d'un desdits terminaux, dit terminal appelant :
- des moyens de détermination (8.2) de l'identifiant d'appel du terminal appelant ;
- des moyens de détermination (8.3,8.4,8.5) d'un identifiant fixe du terminal appelant, à partir de l'identifiant d'appel déterminé ;
- des moyens de récupération (8.6), à partir de l'identifiant fixe déterminé, d'au moins un message vocal à l'attention dudit terminal appelant et de fourniture dudit message vocal récupéré audit terminal appelant.

12. Procédé de gestion de communications de terminaux (1.3;1.4; 1.7) dans un réseau de communication (1.0), chaque terminal mettant en oeuvre le procédé selon la revendication 6 et transmettant, lors d'une phase d'enregistrement (3.1;3.2) dans le dit réseau, un identifiant (2.11) d'abonnement à un service de communication mis en oeuvre dans ledit réseau, à chaque identifiant d'abonnement (5.5) étant associé un identifiant d'appel (5.4) pour permettre d'appeler le terminal enregistré avec ledit identifiant d'abonnement audit service, ledit procédé de gestion de communications étant mis en oeuvre par au moins un dispositif (1.2;1.3;1.4) dudit réseau, ledit procédé de gestion de communications comportant des étapes :
- de changement dynamique d'identifiant d'abonnement audit service (3.11,3.12,3.13) et d'identifiant d'appel associé (3.4,3.5,3.6), pour au moins un desdits terminaux ; et
- de réenregistrement (3.15) dans ledit réseau de chaque terminal pour lequel l'identifiant d'abonnement audit service et l'identifiant d'appel associé ont été dynamiquement changés,
**caractérisé en ce que**, lorsqu'un premier terminal parmi lesdits terminaux (1.3;1.4;1.7) souhaite communiquer avec un second terminal parmi lesdits terminaux (1.3;1.4;1.7), le premier terminal requiert, auprès d'un serveur (1.2), l'identifiant d'appel attribué audit second terminal, et **en ce que** ledit premier terminal établit une communication avec ledit second terminal grâce à une information représentative de l'identifiant d'appel dudit autre terminal reçue de la part du serveur en réponse à ladite requête.

## Patentansprüche

1. Endgerät (1.3; 1.4), das dazu bestimmt ist, in einem Kommunikationsnetz (1.0) verwendet zu werden, wobei das Endgerät dazu vorgesehen ist, bei einer Registrierungsphase (4.1; 4.2) des Endgeräts in dem Netz eine Abonnementidentität (2.11) an einem Kommunikationsdienst, der in dem Netz eingesetzt wird, zu übertragen, wobei das Endgerät umfasst:
- Mittel zur Kommunikation mit einem Server (1.2) über das Netz;
- Mittel zur dynamischen Änderung (4.7; 4.9) der Abonnementidentität an dem Dienst, um eine neue Abonnementidentität zu erhalten; und
- Mittel zur Neuregistrierung (4.10; 4.11) in dem Netz mit der neuen Abonnementidentität,
**dadurch gekennzeichnet, dass** die Mittel zur dynamischen Änderung dazu vorgesehen sind, dass, wenn das Endgerät mit einem anderen Endgerät des Netzes mit der neuen Identität kommunizieren möchte, das Endgerät Mittel zur Anforderung vom Server (1.2) einer Rufidentität, die dem anderen Endgerät zugeordnet ist, einsetzt, die es ermöglichen, das andere Endgerät, das in dem Netz mit einer jeweiligen Abonnementidentität registriert ist, anzurufen, und dass das Endgerät Mittel zur Herstellung einer Kommunikation mit dem anderen Endgerät dank einer Information, die für die Rufidentität des anderen Endgeräts, die von dem Server als Antwort auf die Anforderung erhalten wird, repräsentativ ist, einsetzt.

2. Endgerät nach Anspruch 1, **dadurch gekennzeichnet, dass** die Kommunikationsmittel dazu vorgesehen sind, von dem Server eine Information zu erhalten (3.10; 3.13), die für die neue Abonnementidentität repräsentativ ist.

3. Endgerät nach Anspruch 2, **dadurch gekennzeichnet, dass** die für die neue Abonnementidentität repräsentative Information die neue Abonnementidentität ist.

4. Endgerät nach einem der Ansprüche 1 bis 3, **dadurch gekennzeichnet, dass** die Mittel zur dynamischen Änderung in Abhängigkeit von mindestens einem der folgenden auslösenden Ereignisse eingesetzt werden:
- eine Verzögerungszeit ist abgelaufen;
- ein vorbestimmter Zeitpunkt ist erreicht;
- eine Kommunikation (3.7; 4.5) über das Netz mit dem anderen Endgerät oder einem in dem Netz registrierten dritten Endgerät ist beendet;
- das Endgerät wird neu in einer vorbestimmten geografischen Zone positioniert.

5. Endgerät nach einem der Ansprüche 1 bis 4, **dadurch gekennzeichnet, dass** die Mittel zur dynamischen Änderung und die Mittel zur Neuregistrierung in einer SIM-Karte (2.10) für ein mobiles zellulares Funktelefonendgerät eingesetzt werden.

6. Verfahren, das von einem Endgerät (1.3; 1.4) in einem Kommunikationsnetz (1.0) eingesetzt wird, wobei das Endgerät bei einer Registrierungsphase (4.1; 4.2) des Endgeräts in dem Netz eine Abonnementidentität (2.11) an einem Kommunikationsdienst, der in dem Netz eingesetzt wird, überträgt, wobei das Kommunikations-Endgerät mit einem Server (1.2) über das Netz kommuniziert, wobei das Verfahren die folgenden Schritte umfasst:
- dynamische Änderung (4.7; 4.9) der Abonnementidentität an dem Dienst, um eine neue Abonnementidentität zu erhalten; und
- Neuregistrierung (4.10; 4.11) in dem Netz mit der neuen Abonnementidentität,
**dadurch gekennzeichnet, dass**, wenn das Endgerät mit einem anderen Endgerät des Kommunikationsnetzes mit der neuen Identität kommunizieren möchte, die Vorrichtung vom Server (1.2) eine Rufidentität anfordert, die dem anderen Endgerät zugeordnet ist, wobei es die Rufidentität ermöglicht, das andere Endgerät, das in dem Netz mit einer jeweiligen Abonnementidentität registriert ist, anzurufen, und dass das Endgerät eine Kommunikation mit dem anderen Endgerät dank einer Information, die für die Rufidentität des anderen Endgeräts, die von dem Server als Antwort auf die Anforderung erhalten wird, repräsentativ ist, einsetzt.

7. Speichermittel, **dadurch gekennzeichnet, dass** sie ein Computerprogramm speichern, das Befehle umfasst, um durch ein Endgerät in einem Kommunikationsnetz das Verfahren nach Anspruch 6 einzusetzen, wenn das Programm von einem Prozessor des Endgeräts ausgeführt wird.

8. System (1.2, 1.3) zur Verwaltung von Kommunikationen in einem Kommunikationsnetz (1.0) zwischen Endgeräten (1.3; 1.4; 1.7) nach einem der Ansprüche 1 bis 5, wobei das System die Endgeräte und einen Server (1.2) umfasst, wobei jedes Endgerät dazu vorgesehen ist, bei einer Registrierungsphase (3.1; 3.2) in dem Netz eine Abonnementidentität (2.11) an einem Kommunikationsdienst, der in dem Netz eingesetzt wird, zu übertragen, wobei jede Abonnementidentität (5.5) einer Rufidentität (5.4) zugeordnet ist, um das mit der Abonnementidentität registrierte Endgerät anzurufen, wobei das System umfasst:
- Mittel zur dynamischen Änderung einer Abonnementidentität an dem Dienst (3.11, 3.12, 3.13) und einer zugehörigen Rufidentität (3.4, 3.5, 3.6) für mindestens eines der Endgeräte; und
- Mittel zur Neuregistrierung (3.15) in dem Netz jedes Endgeräts, für das die Abonnementidentität an dem Dienst und die zugehörige Rufidentität dynamisch geändert wurden,
**dadurch gekennzeichnet, dass** die Mittel zur dynamischen Änderung dazu vorgesehen sind, dass, wenn ein erstes Endgerät unter den Endgeräten mit einem zweiten Endgerät unter den Endgeräten kommunizieren möchte, das erste Endgerät Mittel zur Anforderung vom Server (1.2) der Rufidentität, die dem zweiten Endgerät zugeordnet ist, einsetzt, und dass das erste Endgerät Mittel zur Herstellung einer Kommunikation mit dem zweiten Endgerät dank einer Information, die für die Rufidentität des anderen Endgeräts, die von dem Server als Antwort auf die Anforderung erhalten wird, repräsentativ ist, einsetzt.

9. System nach Anspruch 8, **dadurch gekennzeichnet, dass** der Server dazu vorgesehen ist, an die Endgeräte Kurznachrichten für den Einsatz der Mittel zur dynamischen Änderung zu übertragen, wobei die Nachrichten über ein Kurznachrichtendienstzentrum (6.1), das den Server für die Vorrichtungen des Netzes verbirgt, ausgetauscht werden.

10. System nach einem der Ansprüche 8 oder 9, **dadurch gekennzeichnet, dass** es einen Voice-Mail-Server (7.1) umfasst, der bei Rufrücksendung nach einer fehlenden Antwort eines der Endgeräte, ursprünglich angerufenes Endgerät genannt, eingesetzt wird und umfasst:
- Mittel (7.3) zur Bestimmung der Rufidentität des ursprünglich angerufenen Endgeräts;
- Mittel zur Bestimmung (7.4, 7.5, 7.6) einer fixen Identität des ursprünglich angerufenen Endgeräts auf Basis der bestimmten Rufidentität;
- Mittel zur Registrierung einer Voice-Mail zu Händen des ursprünglich angerufenen Endgeräts und zur Verbindung der registrierten Voice-Mail mit der bestimmten fixen Identität.

11. System nach Anspruch 10, **dadurch gekennzeichnet, dass** der Voice-Mail-Server ferner, bei Anruf eines der Endgeräte, anrufendes Endgerät genannt, eingesetzt, umfasst:
- Mittel zur Bestimmung (8.2) der Rufidentität des anrufenden Endgeräts;
- Mittel zur Bestimmung (8.3, 8.4, 8.5) einer fixen Identität des anrufenden Endgeräts auf Basis der bestimmten Rufidentität;
- Mittel zur Wiederherstellung (8.6) auf Basis der bestimmten fixen Identität mindestens einer Voice-Mail zu Händen des anrufenden Endgeräts und zur Lieferung der wiederhergestellten Voice-Mail an das anrufende Endgerät.

12. Verfahren zur Verwaltung von Kommunikationen von Endgeräten (1.3; 1.4; 1.7) in einem Kommunikationsnetz (1.0), wobei jedes Endgerät das Verfahren nach Anspruch 6 einsetzt und bei einer Registrierungsphase (3.1; 3.2) in dem Netz eine Abonnementidentität (2.11) an einem Kommunikationsdienst, der in dem Netz eingesetzt wird, überträgt, wobei jede Abonnementidentität (5.5) einer Rufidentität (5.4) zugeordnet ist, um es zu ermöglichen, das mit der Abonnementidentität an dem Dienst registrierte Endgerät anzurufen, wobei das Verfahren zur Kommunikationsverwaltung von mindestens einer Vorrichtung (1.2; 1.3; 1.4) des Netzes eingesetzt wird, wobei das Verfahren zur Kommunikationsverwaltung die folgenden Schritte umfasst:
- dynamische Änderung einer Abonnementidentität an dem Dienst (3.11, 3.12, 3.13) und einer zugehörigen Rufidentität (3.4, 3.5, 3.6) für mindestens eines der Endgeräte; und
- Neuregistrierung (3.15) in dem Netz jedes Endgeräts, für das die Abonnementidentität an dem Dienst und die zugehörige Rufidentität dynamisch geändert wurden,
**dadurch gekennzeichnet, dass**, wenn ein erstes Endgerät unter den Endgeräten (1.3; 1.4; 1,7) mit einem zweiten Endgerät unter den Endgeräten (1.3; 1.4; 1.7) kommunizieren möchte, das erste Endgerät von einem Server (1.2) die Rufidentität anfordert, die dem zweiten Endgerät zugeordnet ist, und dass das erste Endgerät eine Kommunikation mit dem zweiten Endgerät dank einer Information, die für die Rufidentität des anderen Endgeräts, die von dem Server als Antwort auf die Anforderung erhalten wird, repräsentativ ist, herstellt.

## Claims

1. Terminal (1.3; 1.4) intended to be used in a communication network (1.0), said terminal being adapted to transmit, during a phase of registration (4.1;4.2) of said terminal in said network, an identifier (2.11) of subscription to a communication service implemented in said network, said terminal comprising:
- means of communication with a server (1.2) via said network;
- means of dynamic change (4.7;4.9) of the identifier of subscription to said service so as to obtain a new subscription identifier; and
- means of reregistration (4.10;4.11) in said network with the new subscription identifier,
**characterized in that** the means of dynamic change are adapted so that, when said terminal wishes to communicate with another terminal of said network with the new identifier, said terminal implements means for requesting, from said server (1.2), a call identifier allocated to said other terminal, said call identifier making it possible to call said other terminal which is registered in said network with a respective subscription identifier, and **in that** said terminal implements means for establishing a communication with said other terminal by virtue of an item of information representative of the call identifier of said other terminal and received from the server in response to said request.

2. Terminal according to Claim 1, **characterized in that** said communication means being adapted to receive (3.10; 3.13) from said server an item of information representative of the new subscription identifier.

3. Terminal according to Claim 2, **characterized in that** the item of information representative of the new subscription identifier is the new subscription identifier.

4. Terminal according to any one of Claims 1 to 3, **characterized in that** said means of dynamic change are implemented as a function of at least one of the following trigger events:
- a timeout duration has elapsed;
- a predetermined instant is reached;
- a communication (3.7;4.5), via said network, with the other terminal or a third-party terminal registered in said network has ended;
- said terminal is newly positioned in a predetermined geographical zone.

5. Terminal according to any one of Claims 1 to 4, **characterized in that** said means of dynamic change and said means of reregistration are implemented in a SIM card (2.10) for mobile cellular radiotelephony terminal.

6. Method implemented by a terminal (1.3; 1.4) in a communication network (1.0), said terminal transmitting, during a phase of registration (4.1; 4.2) of the terminal in said network, an identifier (2.11) of subscription to a communication service implemented in said network, the communication terminal communicating with a server (1.2) via said network, the method comprising steps of:
- dynamic change (4.7;4.9) of the identifier of subscription to said service so as to obtain a new subscription identifier; and
- reregistration (4.10;4.11) in said network with the new subscription identifier,
**characterized in that**, when a said terminal wishes to communicate with another terminal of the communication network with the new identifier, said device requests, from the server (1.2), a call identifier allocated to said other terminal, said call identifier making it possible to call said other terminal which is registered in said network with a respective subscription identifier, and **in that** said terminal establishes a communication with said other terminal by virtue of an item of information representative of the call identifier of said other terminal and received from the server in response to said request.

7. Storage means, **characterized in that** they store a computer program comprising instructions for implementing, by a terminal in a communication network, the method according to Claim 6, when said program is executed by a processor of said terminal.

8. System (1.2, 1.3) for managing communications in a communication network (1.0) between terminals (1.3; 1.4; 1.7) according to any one of Claims 1 to 5, said system comprising said terminals and a server (1.2), each terminal being adapted to transmit, during a phase of registration (3.1;3.2) in said network, an identifier (2.11) of subscription to a communication service implemented in said network, with each subscription identifier (5.5) there being associated a call identifier (5.4) so as to make it possible to call the terminal registered with said subscription identifier, said system comprising:
- means of dynamic change of identifier of subscription to said service (3.11,3.12,3.13) and of associated call identifier (3.4,3.5,3.6), for at least one of said terminals; and
- means of reregistration (3.15) in said network of each terminal for which the identifier of subscription to said service and the associated call identifier have been dynamically changed,
**characterized in that** the means of dynamic change are adapted so that, when a first terminal from among said terminals wishes to communicate with a second terminal from among said terminals, the first terminal implements means for requesting, from the server (1.2), the call identifier allocated to said second terminal, and **in that** said first terminal implements means for establishing a communication with said second terminal by virtue of an item of information representative of the call identifier of said other terminal and received from the server in response to said request.

9. System according to Claim 8, **characterized in that** said server (1.2) is adapted to transmit to said terminals short messages for the implementation of said means of dynamic change, said messages being exchanged via a short message service centre (6.1) masking said server for the devices of said network.

10. System according to either one of Claims 8 or 9, **characterized in that** it comprises a voice messaging server (7.1) comprising, implemented on call diversion subsequent to an absence of response of one of said terminals, termed the originally called terminal:
- means (7.3) for determining the call identifier of the originally called terminal;
- means (7.4,7.5,7.6) for determining a fixed identifier of the originally called terminal, on the basis of the call identifier determined;
- means for recording a voice message for the attention of said originally called terminal and for associating the recorded voice message with the fixed identifier determined.

11. System according to Claim 10, **characterized in that** the voice messaging server furthermore comprises, implemented on call of one of said terminals, termed the calling terminal:
- means (8.2) for determining the call identifier of the calling terminal;
- means (8.3,8.4,8.5) for determining a fixed identifier of the calling terminal, on the basis of the call identifier determined;
- means (8.6) for retrieving, on the basis of the fixed identifier determined, at least one voice message for the attention of said calling terminal and for providing said retrieved voice message to said calling terminal.

12. Method for managing communications of terminals (1.3; 1.4; 1.7) in a communication network (1.0), each terminal implementing the method according to Claim 6 and transmitting, during a phase of registration (3.1; 3.2) in said network, an identifier (2.11) of subscription to a communication service implemented in said network, with each subscription identifier (5.5) there being associated a call identifier (5.4) so as to make it possible to call the terminal registered with said identifier of subscription to said service, said method for managing communications being implemented by at least one device (1.2; 1.3; 1.4) of said network, said method for managing communications comprising steps:
- of dynamic change of identifier of subscription to said service (3.11,3.12,3.13) and of associated call identifier (3.4,3.5,3.6), for at least one of said terminals; and
- of reregistration (3.15) in said network of each terminal for which the identifier of subscription to said service and the associated call identifier have been dynamically changed,
**characterized in that**, when a first terminal from among said terminals (1.3;1.4;1.7) wishes to communicate with a second terminal from among said terminals (1.3;1.4;1.7), the first terminal requests, from a server (1.2), the call identifier allocated to said second terminal, and **in that** said first terminal establishes a communication with said second terminal by virtue of an item of information representative of the call identifier of said other terminal and received from the server in response to said request.
